# EUROPEAN PATENT APPLICATION

(11) **EP 2 638 791 A1**
(43) Date of publication of application: **18.09.2013**
(21) Application number: 12159641.5
(22) Date of filing: 15.03.2012
(51) Int. Cl.: A01C 3/02, B65D 88/34

(54) **Floating cover**

(71) Applicant: Plany AS, 6082 Gursken (NO)
(72) Inventor: Waagen, Børre, 6080 Gurskøy (NO); Notøy, Sigbjørn, 6070 Tjørvåg (NO)
(74) Representative: Plougmann & Vingtoft A/S

(57) **Abstract**

The invention relates to a floating cover for a reservoir containing liquid mass, such as a manure pit. The cover comprises a buoyancy element (1) and a flexible membrane (9) connected to the buoyancy element (1). The membrane (9) is provided with intermediate members (10) being connected to a wire (11) which is anchored on the buoyancy element (1) by means of anchoring organs (8).
The invention further relates to a method for making a floating cover comprising the steps of:
- connecting a number of tubes (1) to a tube arrangement,
- connecting a first rope to one end of the tube arrangement and in a middle position of the length of the tube arrangement,
- pulling the rope to form a half-circle,
- connecting a second rope to the first and second end of the tube arrangement and pulling them together, thereby forming a circular tube arrangement,
- providing a wire (11) in anchoring organs (8) on the tube arrangement,
- connecting a membrane (9) to the wire (11).

## Description

### FIELD OF THE INVENTION

The present invention relates to devices for covering open containers for fluids or other fluid bulk, such as open manure pits. More specifically, it relates to covers comprising a buoyancy element holding a watertight flexible membrane, where the shape of the buoyancy elements follow the inner wall of the container on which it is arranged. The buoyancy element element can for example be circular and holding a tarpaulin covering the central area of the circle formed by the buoyancy element.

### BACKGROUND OF THE INVENTION

In general, there is a request for reliable floating covers suitable for partly or completely covering basins, cisterns or other reservoirs containing fluids, pulp, mass or a fluid combination thereof. For outdoor use, the floating cover will collect precipitation or rain and avoid the precipitation from getting mixed with the fluid mass in the reservoir. Floating covers are for example used to cover manure pits.

There are several aspects related to open manure pits motivating for a reliable cover over the pit. If there is no cover over the manure, there will normally be a substantial smell rising from the pit, which in most areas is prohibited out of consideration for the neighbours. From another point of view, there is also a need to prevent rain from diluting the manure in an uncontrolled manner. In some situations, biogas rising from the manure is also collected under and in relation to the cover.

From DK 173108 B1, it is known to provide a floating cover in the form of a tarpaulin stretched over two circular tubes having mainly the same diameter as the inner wall of a manure pit. The tubes are hollow and provide buoyancy for the tarpaulin. The tarpaulin is stretched over and around the outside the tubes. A load is arranged in the middle of the cover, to form a depression where rain water can be collected. The load can be a pump that is pumping collected fluid away from the cover.

However, as the cover normally is arranged on a pit in open air, it will also be affected by wind and weather. People or devices moving or manipulating with the cover or manure situated under the cover will also cause wear and tear on the construction. When the cover is moving, the tarpaulin stretched over the tubes will rub against the inner walls of the manure put and it is likely that the tarpaulin will eventually tear up.

Furthermore, it is a rather cumbersome process to stretch out and secure the tarpaulin over the tubes to produce the cover described in DK 173108 B1.

### OBJECT OF THE INVENTION

It is an object of the invention to provide a cover suitable for covering manure pits or other reservoirs containing fluids, where the lifespan of the cover is improved as the risk of tearing of the tarpaulin is minimised.

It is further an object of the invention to present an improved and simplified method for making a cover suitable for an open reservoir containing fluid.

It is a further object of the present invention to provide an alternative to the prior art.

In particular, it may be seen as an object of the present invention to provide a cover that solves the above mentioned problems of the prior art with an improved method for attaching a fitted membrane such as a tarpaulin to a floating device such as a tube arrangement and a floating cover made according to the method.

### SUMMARY OF THE INVENTION

Thus, the above described object and several other objects are intended to be obtained in a first aspect of the invention by providing a floating cover for a reservoir containing liquid mass, such as a manure pit, comprising a buoyancy element and a flexible membrane connected to the buoyancy element, where the membrane is provided with intermediate members being connected to a wire which is anchored on the buoyancy element by means of anchoring organs. When used in a circular reservoir, the buoyancy element will have a circular shape.

The anchoring organs are arranged on a part of the surface of the buoyancy element having a perpendicular pointing away from the centre of the cover. The anchoring organs can be lugs with through-going holes arranged on the surface of the tubes.

According to an aspect of the invention, the buoyancy element comprises a number of tubes being connected by means of sockets. The tubes and sockets are provided with corresponding holes forming intersecting passages in the tubes and sockets. Intersecting rods are inserted in the holes, thereby holding the end sections of two adjacent tubes in place in each of the sockets.

The wire of the floating cover comprises a number of wire segments being connected by connections comprising a tension device holding the end sections of two wire segments by means of a number of loop clamps.

The membrane can be provided with one or more skirts. The one or more skirts can be provided with one or more buoyancy members or sinker elements.

The invention further relates to a method for making a floating cover comprising the steps of:
- connecting a number of tubes to a tube arrangement, the tube arrangement having a first and second end,
- connecting a first rope to one end of the tube arrangement and in a middle position of the length of the tube arrangement,
- pulling the first rope to form a half-circle,
- connecting a second rope to the first and second end of the tube arrangement and pulling the first and second end together by means of the second rope, thereby forming a closed tube arrangement,
- providing a wire in anchoring organs on the tube arrangement, and
- connecting a membrane to the wire.

The method can also comprise the steps of:
- forming the wire of wire segments being connected by means of a number of tension devices and loop clamps, and
- tightening or slackening the wire by means of the tension devices.

The method can also comprise the steps of:
- providing intermediate members on the edge area of the membrane,
- connecting the intermediate members to the wire.

The aspects of the present invention may each be combined with any of the other aspects. These and other aspects of the invention will be apparent from and elucidated with reference to the embodiments described hereinafter.

### BRIEF DESCRIPTION OF THE FIGURES

The floating cover according to the invention will now be described in more detail with regard to the accompanying figures. The figures show one way of implementing the present invention and is not to be construed as being limiting to other possible embodiments falling within the scope of the attached claim set.
Figure 1 shows an exploded view of a tube connection.
Figure 2 shows a number of tubes in the process of being formed into a circle.
Figure 3 shows an arrangement of ropes suitable for mounting a cover according to the invention
Figure 4 shows a section of a first embodiment of a cover according to the invention.
Figure 5 shows an arrangement for placing the cover on a reservoir.
Figure 6 shows a section of a second embodiment of a cover according to the invention.
Figure 7 shows a section of a third embodiment of a cover according to the invention.
Figure 8 shows a section of a fourth embodiment of a cover according to the invention.

### DETAILED DESCRIPTION OF AN EMBODIMENT

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

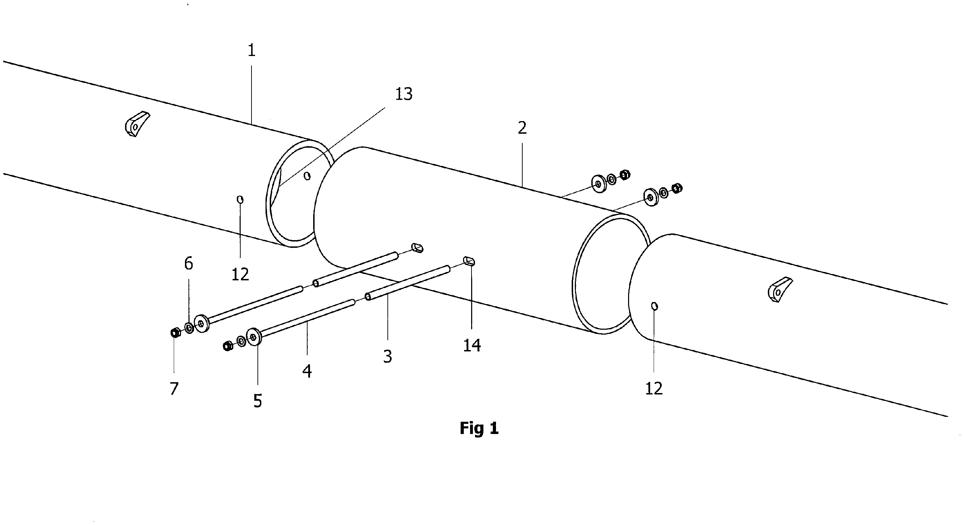

Figure 1 shows an exploded view of a tube connection. In other words, it is shown an arrangement for connecting tubes suitable for making a circular floating element for use with a cover according to the invention. The end section of tubes 1 are pushed into a socket 2. Partly or completely threaded rods 4 are intersecting the tubes and socket by means of through going holes 12, 14. The rods 4 are holding the tubes in the socket. The rods 4 are protected by sleeves 3. The rods 4 and sleeves 3 are further locked in place by means of washers 5, 6 and nuts 7. The sleeves minimise the gnawing or wearing off in the interface between the tube, socket and rods, which may arise e.g. due to natural movements in the cover.

As can be seen on fig. 1, the tubes 1 and sockets 2 are provided with holes 12, 14 to accommodate the rods 4 and sleeves 3 intersecting the circumference of the tubes and sockets. To ensure a closed cavity in the tubes, the tubes in the shown embodiment, are provided with inner walls 13 sealing off the inner cavities of the tubes, thereby ensuring a reliable buoyancy of the circular tube arrangement.

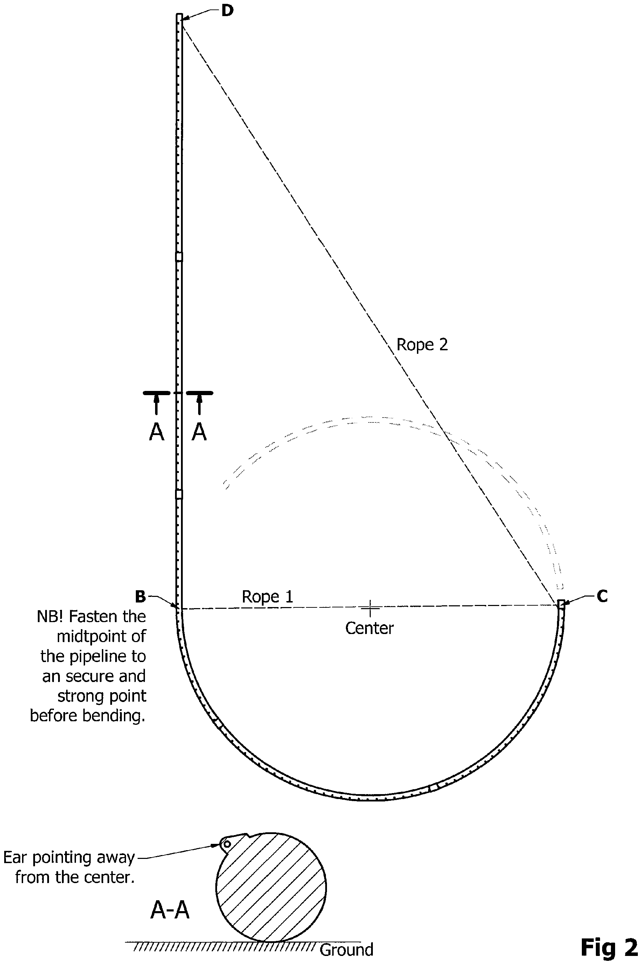

Figure 2 shows a method for making a closed buoyancy element for use in a cover according to the invention. In figure 2, a number of connected tubes are forming a tube arrangement with a first and a second end. The tube arrangement is in the process of being formed into a circular or round shape. A first rope is attached to one end of the tube arrangement and to approximately the middle of the length of the tube arrangement, in such a way that the rope can be used to pull a part of the tube arrangement into a bow or half circle. A second rope is attached to the two ends of the tube arrangement in such a way that the two ends can be pulled together by the second rope, thereby forming a closed shape such as a full circle of the tube arrangement. Care must be taken to ensure that anchoring organs 8, further described below, will be situated on part of the surface of the tube arrangement having a perpendicular pointing outwards from centre of the ring or other closed shape formed by the tube arrangement.

With a rope, it is here meant an elongated element such as a rope, wire, cable, line or even a number of these, suitable for being connected to two positions on a flexible member and subsequently pulling the two positions together.

In the shown embodiment, the buoyancy element has a circular shape suitable for covering a circular reservoir. When the buoyancy element is used in a cover for a reservoir of an other shape, the buoyancy element will be adapted to the inner shape of that reservoir. In other words, the perimeter of the buoyancy element, and thereby of the cover can have any desired shape within the scope of the invention.

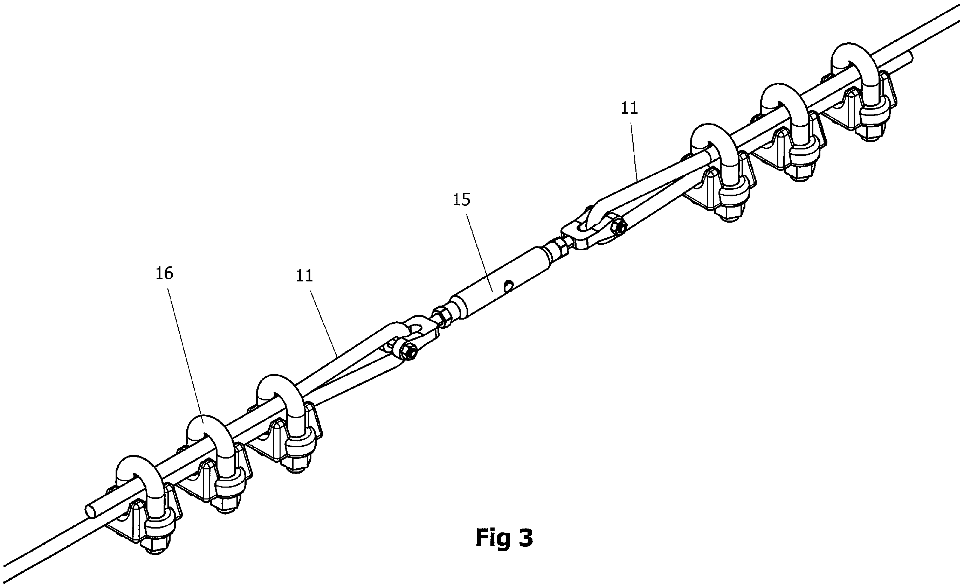

Figure 3 shows an arrangement for joining wires suitable for use in a cover according to the invention. It is practical to use a wire or the like to connect the tarpaulin to the tube arrangement. It is also advantageous to be able to tighten or slacken the wire beforehand and in situ. To ensure a flexible handling of the wire following the circumference of the tube arrangement, the wire can comprise a number of wire segments being connected by an arrangement as shown on figure 3. The end section of the wire 11 is hooked onto a tension device 15 by means of loop clamps 16. The tension device 15 can be prolonged or shortened, thereby slackening or tightening the wire.

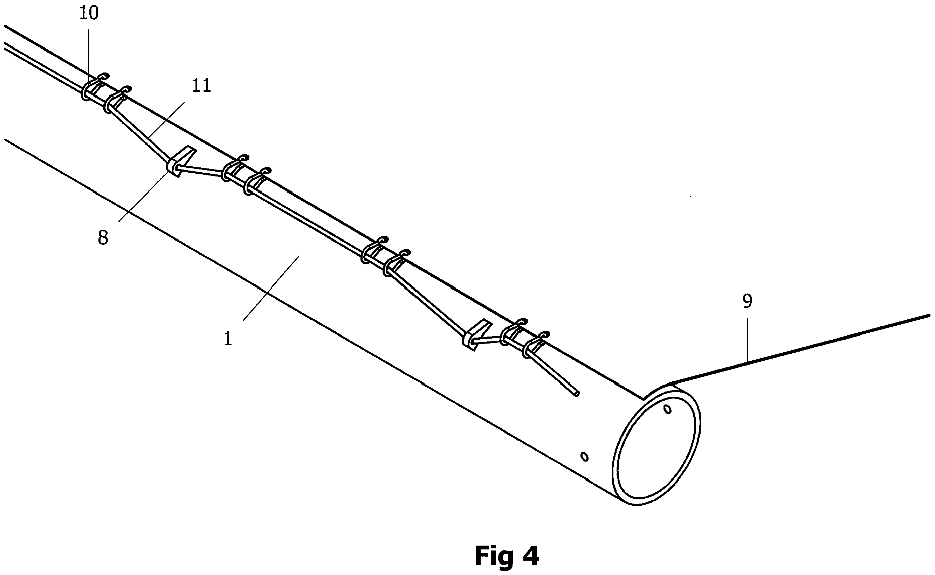

Figure 4 shows a section of a first embodiment of a cover according to the invention. The tubes 1 are provided with a number of anchoring organs 8 arranged on the outer surface side of the tube. In the shown embodiment the anchoring organs 8 are lugs with through going holes. By the outer surface side of the tube arrangement, it is here meant the surface of the tube arrangement where a perpendicular on the surface will point outwards from the centre of the cover or of the circle formed by the tube arrangement. A membrane or tarpaulin 9 is provided with a number of holes or the like for connecting a number of intermediate members 10 to the membrane. The intermediate members 10 connect the membrane 9 to a wire 11 being arranged in the anchoring organs 8 on the tube arrangement. When the membrane is connected to the tube arrangement, the wire can be tightened by means of tension devices 15 arranged around the circumference of the tube arrangement.

In a floating cover according to the invention, the membrane is connected to the buoyancy element by means of an arrangement of intermediate members and anchoring organs. In the shown embodiments, there is further used a wire or the like to anchor the membrane to the circular buoyancy element. The membrane arranged in the tube arrangement, can be tensioned by means of tension devices 15 shown in figure 3. When the membrane 9 is stretched out on the circular tube arrangement, the edge area of the membrane will lie mainly straight over the upper side of the tube.

It should be noted that the membrane is stretched over the upper ridge of the tube arrangement. In other words, the membrane is arranged in such a way that the edge area of the membrane is passing outwards from the centre of the cover and over a line formed by the upper turning points on the surface of the tubular arrangement. The membrane will then bend slightly or distinctly over the upper part of the tube arrangement, so that a possible gap between the membrane and the circular buoyancy element is minimised.

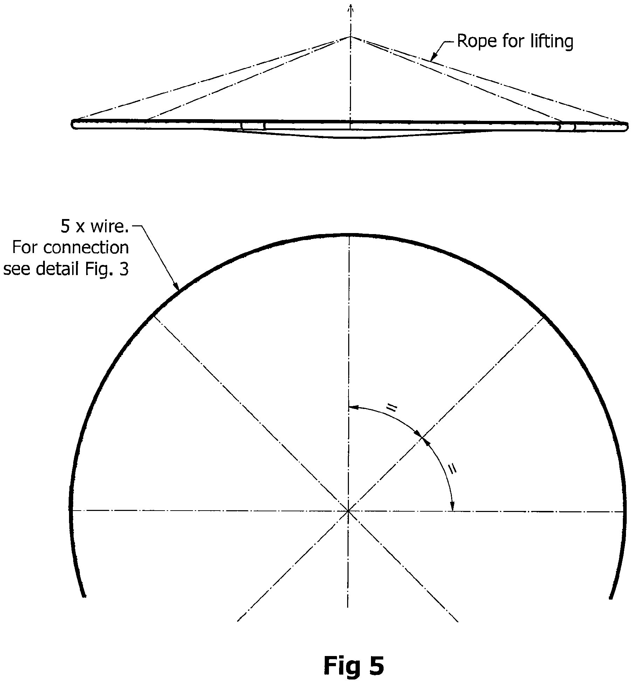

Figure 5 shows an arrangement for placing the cover on a reservoir. A number of ropes are connected to the buoyancy element at a first end and to each other over the centre of the cover at the second end, so that the assembly of the second rope ends are at a distance over the centre of the cover. The cover can then be lifted and moved by the assembly of ropes.

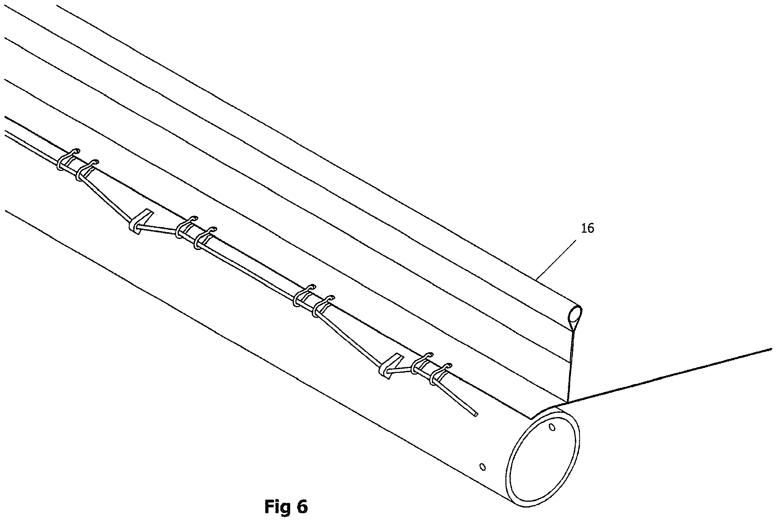

Figure 6, 7 and 8 shows a section of a second, third and fourth embodiment of a cover according to the invention. If desirable, one or more buoancy members 19 can be arranged in connection with the membrane, for example along the edge area of the membrane or tarpaulin or arranged in one or more skirts on the membrane, see fig. 6. Buoyancy members 19 can also be integrated in the membrane, for example sewed into pockets or hollows on or under the membrane or moulded in or onto the membrane, dependent on the material of the membrane. Such buoancy members can assist in lifting the circular buoyancy element, for example if large amounts of water is collected on the membrane.

If the further elements are arranged on the upper side of the cover, they can provide an extra barrier between water or other material collected on the floating cover and the mass in the reservoir. The additional buoyancy members can be of any material or form. Materials with low density such as polystyrene or other polymeric foams are well suitable. Hollow elements equivalent to the tubes of the circular elements are also applicable.

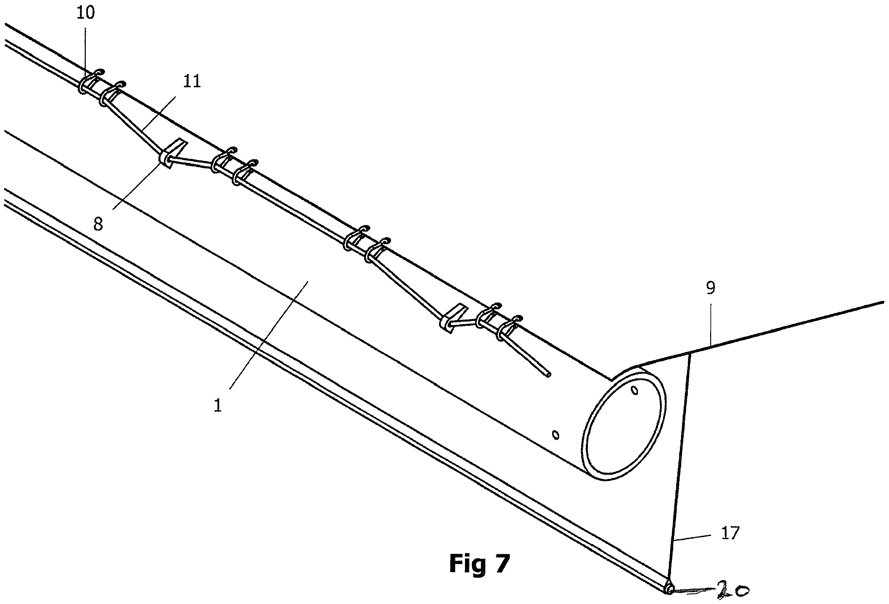

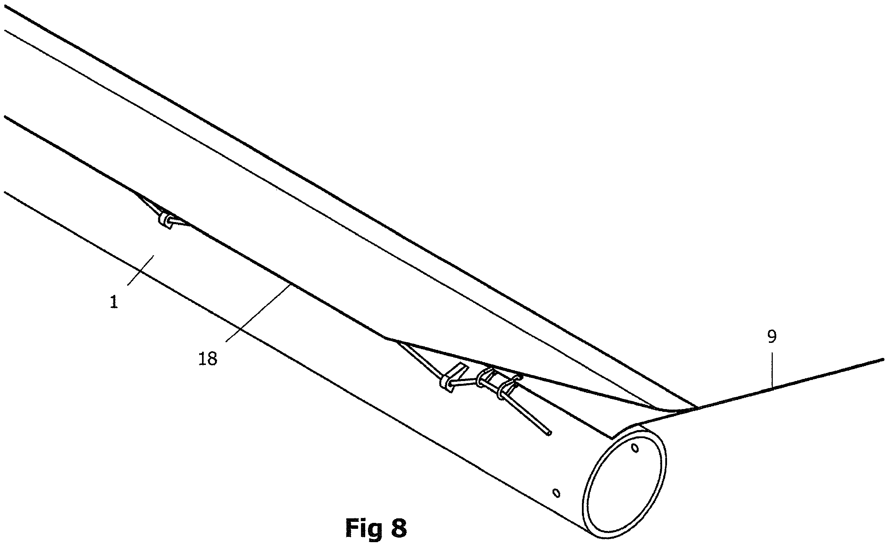

It is also conceivable to provide the floating cover with a further shield between the mass in the reservoir and atmosphere, for example to collect biogas under the membrane. Such a further shield can be one or more skirts 17 hanging down from the edge area of the membrane on the inside of the circular tube arrangement, see fig. 7. The skirt or skirts should be long enough to stretch down into the liquid mass in the reservoir. The skirt or skirts can be provided with sinker members 20 at the lower edge area of the skirt. When looked in cross section, the skirt will hang down into the mass. The further shield can also be one or more skirts 18 being attached to the edge area of the membrane on the outside of the cover and to the rim of the reservoir in such a way that the outer edge of the floating cover and inner side of the reservoir will be hidden under the skirt or skirts, see fig. 8.

In the shown embodiment, the anchoring organs 8 are lugs with through going holes. It is also possible to form the anchoring organs as a hook where the wire is hooked onto outwardly open hooks. The organs can also be formed as clamps clamping the wire or sleeves arranged on the wire, onto the buoyance element.

The flexible membrane should be made in a durable watertight material. As an example, the membrane can be made of a tarpaulin fitted to the surface of the reservoir on which the cover is to be arranged.

## Claims

1. A floating cover for a reservoir containing liquid mass, such as a manure pit, comprising a buoyancy element (1) and a flexible membrane (9) connected to the buoyancy element (1),
**characterised in that** the membrane (9) is provided with intermediate members (10) being connected to a wire (11) which is anchored on the buoyancy element (1) by means of anchoring organs (8).

2. A floating cover according to claim 1,
**characterised in that** the buoyancy element (1) comprises a number of tubes and a number of sockets (2), the tubes and sockets are provided with corresponding holes (12, 14), end sections of adjacent tubes are held in the sockets by means of intersecting rods (4) transversing the holes (12,14) of the tubes and sockets.

3. A floating cover according to claim 1 or 2,
**characterised in that** the anchoring organs (8) are arranged on a surface of the buoyancy element (1), said surface having a perpendicular pointing away from the centre of the circle.

4. A floating cover according to any of the claims 1-3,
**characterised in that** the wire (11)comprises number of wire segments being connected by connections comprising a tension device (15) holding two end sections of adjacent wire segments by means of a number of loop clamps (16).

5. A floating cover according to any of the preceding claims 1-4, **characterised in that** the anchoring organs (8) are lugs with through going holes arranged on the surface of the tubes (1).

6. A floating cover according to any of the preceding claims 1-5, **characterised in that** the membrane (9) is provided with one or more skirts (17,18).

7. A floating cover according to claim 6,
**characterised in that** the one or more skirts is provided with one or more buoyancy member (19) or sinker elements (20).

8. Method for preparing a floating cover comprising the steps of:
- connecting a number of tubes ( to a tube arrangement, said tube arrangement having a first and second end,
- connecting a first rope to one end of the tube arrangement and in a middle position of the length of the tube arrangement,
- pulling the first rope to form a half-circle of a part of the tube arrangement,
- connecting a second rope to the first and second end of the tube arrangement and pulling the first and second ends together by means of the second rope, thereby forming a closed tube arrangement,
- providing a wire (11) in anchoring organs (8) on the tube arrangement, and
- connecting a membrane (9) to the wire (11).

9. Method according to claim 8, further comprising the step of:
- forming the wire (11) of wire segments being connected by means of a number of tension devices (15) and loop clamps (16),
- tightening or slackening the wire (11) by means of the tension devices (15).

10. Method according to claim 8 or 9, further comprising the step of:
- providing intermediate members (10) on the edge area of the membrane (9),
- connecting the intermediate members (10) to the wire (11).
